(19) Europäisches Patentamt
European Patent Office
Office européen des brevets

(11) **EP 1 891 769 B1**

(12) **FASCICULE DE BREVET EUROPEEN**

(45) Date de publication et mention de la délivrance du brevet:
**10.08.2011 Bulletin 2011/32**

(51) Int Cl.:
*H04L 9/30* *(2006.01)* *G06F 7/72* *(2006.01)*

(21) Numéro de dépôt: **06778940.4**

(86) Numéro de dépôt international:
**PCT/FR2006/050562**

(22) Date de dépôt: **14.06.2006**

(87) Numéro de publication internationale:
**WO 2006/134306 (21.12.2006 Gazette 2006/51)**

(54) **PROTECTION D'UN CALCUL D'EXPONENTIATION MODULAIRE EFFECTUE PAR UN CIRCUIT INTEGRE**

SCHUTZ EINER MODULAREN POTENZIERUNGSBERECHNUNG MITTELS INTEGRIERTER SCHALTUNG

PROTECTION OF A MODULAR EXPONENTIATION COMPUTING PRODUCED BY AN INTEGRATED CIRCUIT

(84) Etats contractants désignés:
**DE FR GB IT**

(30) Priorité: **16.06.2005 FR 0551649**

(43) Date de publication de la demande:
**27.02.2008 Bulletin 2008/09**

(73) Titulaire: **STMicroelectronics SA**
**F-92120 Montrouge (FR)**

(72) Inventeurs:
• **TEGLIA, Yannick**
**F-13011 Marseille (FR)**
• **LIARDET, Pierre-Yvan**
**F-13790 Peynier (FR)**
• **POMET, Alain**
**F-13790 Rousset (FR)**

(74) Mandataire: **de Beaumont, Michel**
**Cabinet Beaumont**
**1, rue Champollion**
**38000 Grenoble (FR)**

(56) Documents cités:
**WO-A-01/31436 US-B1- 6 298 135**

• **COMBA P G: "EXPONENTIATION CRYPTOSYSTEMS ON THE IBM PC" IBM SYSTEMS JOURNAL, IBM CORP. ARMONK, NEW YORK, US, vol. 29, no. 4, janvier 1990 (1990-01), pages 526-538, XP000265347 ISSN: 0018-8670**

**Description**

Domaine de l'invention

La présente invention concerne de façon générale les circuits électroniques et, plus particulièrement, la protection de données contenues dans un circuit intégré contre une extraction de ces données suite à une analyse de la consommation du circuit pendant des calculs les manipulant. L'invention concerne plus particulièrement la protection d'algorithmes d'exponentiation modulaire. De tels algorithmes sont utilisés, par exemple, dans des cartes à puces ou des composants sécurisés pour chiffrer, signer ou mettre en commun des données au moyen d'une quantité secrète de la puce (par exemple dans un algorithme de type DSA, RSA ou Diffie-Hellman).

Exposé de l'art antérieur

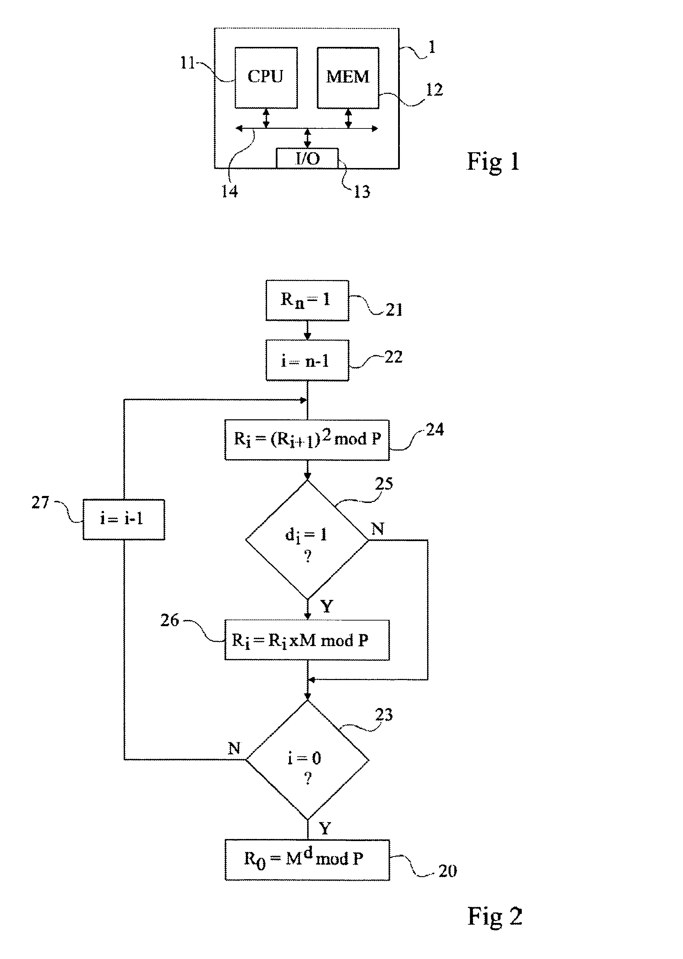

La figure 1 représente, de façon très schématique et sous forme de blocs, un exemple d'architecture simplifiée d'un circuit intégré 1, par exemple d'une carte à puce, du type auquel s'applique la présente invention. Le circuit 1 comporte une unité centrale de traitement 11 (CPU) associée à une ou plusieurs mémoires 12 (MEM) parmi lesquelles généralement au moins un élément de stockage non volatil d'une quantité numérique secrète (par exemple, un code confidentiel), et un circuit 13 d'entrée-sortie (I/O) permettant l'échange des données avec l'extérieur du circuit 1. Les différents éléments communiquent par un ou plusieurs bus internes 14 de données, d'adresses et de commandes. Le plus souvent, plusieurs mémoires 12 parmi lesquelles au moins une mémoire vive et une mémoire non volatile de stockage d'un programme sont prévues dans le circuit.
Parmi les attaques possibles effectuées par des fraudeurs pour obtenir des données confidentielles de la puce 1, l'invention s'applique plus particulièrement aux attaques dites par analyse de la consommation (SPA - Simple Power Analysis ou DPA - Differential Power Analysis). De telles attaques consistent à mesurer la consommation énergétique du circuit intégré pendant l'exécution d'algorithmes manipulant des clés ou quantités "secrètes" que le fraudeur cherche à découvrir, cette consommation étant différente selon les états respectifs des bits des quantités manipulées. Les attaques par analyse statistique de la consommation sont basées sur l'exploitation de résultats fournis par la puce à partir d'hypothèses faites sur les différents bits de la clé. Ces attaques sont généralement itératives pour découvrir successivement les différents bits d'une quantité secrète.
La figure 2 représente, sous forme d'organigramme simplifié, un exemple classique de mise en oeuvre d'un calcul d'exponentiation modulaire de modulo P, où P est un nombre sur p bits consistant, à partir d'un message M sur un nombre quelconque (codé sur au plus p bits) et d'une quantité secrète d sur n bits (n étant quelconque), à calculer le résultat $R_0 = M^d \bmod P$ (bloc 20).
Pour effectuer ce calcul, il est nécessaire de passer par des résultats intermédiaires calculés par multiplications successives. On parle de méthode de carré-multiplication (square-multiply). Dans l'exemple représenté, un seul registre contenant le résultat R est utilisé.
On initialise (bloc 21, $R_n = 1$) une grandeur $R_n$ contenue dans un registre unique, comme égale à l'unité. Le même registre contiendra, en fin d'algorithme, le résultat final $R_0$. On initialise ensuite un compteur i comme étant égal à n-1 (bloc 22). L'indice i du compteur correspond aux rangs successifs des n bits de la quantité secrète d qui peut s'écrire :

$$d = \sum_{i=0}^{n-1} d_i \, 2^i \ .$$

L'initialisation du compteur d'indice i revient à initialiser une boucle jusqu'à i = 0 (bloc 23) à l'intérieur de laquelle vont être effectuées des multiplications successives en fonction de l'état du bit $d_i$ courant de la quantité d.
Dans une première étape (bloc 24) de cette boucle, on calcule un résultat intermédiaire $R_i$ en élevant au carré (multiplication par lui-même) le contenu du registre unique modulo P. Ce résultat intermédiaire $R_i = (R_{i+1})^2 \bmod P$ vient remplacer la valeur contenue dans le registre résultat.
Puis, on effectue un test (bloc 25, $d_i = 1$ ?) de l'état du bit courant de la quantité d (exposant de l'exponentiation). Si cet état est 1 (sortie Y du bloc 25), le résultat de l'opération précédente est multiplié par le message M modulo P (bloc 26, $R_i = R_i * M \bmod P$). Le résultat de cette deuxième multiplication est toujours stocké dans le même registre. Si le bit $d_i$ est à l'état zéro (sortie N du bloc 25), l'opération du bloc 26 n'est pas exécutée.
Tant que la boucle n'est pas terminée (sortie N du bloc 23), le compteur i est décrémenté (bloc 27, i = i-1) et on revient en entrée du bloc 24.
A la fin de la boucle (sortie Y du bloc 23), le registre résultat contient la grandeur $R_0$.
Un inconvénient du procédé de la figure 2 est que la consommation du circuit dépend de l'exécution ou non de l'étape 26. Or, cette exécution de l'étape 26 dépend directement du bit courant de la quantité censée rester secrète. Par conséquent,

une telle mise en oeuvre d'un algorithme d'exponentiation modulaire est particulièrement vulnérable.

La demande de brevet américain US 6298135 divulgue un procédé de protection d'une quantité numérique contenue dans un circuit intégré le procédé comprenant la division de la quantité numérique en parties.

Résumé de l'invention

La présente invention vise à pallier tout ou partie des inconvénients des circuits intégrés manipulant des quantités considérées comme confidentielles dans des calculs d'exponentiation modulaire.

L'invention vise plus particulièrement à protéger les quantités considérées comme confidentielles contre d'éventuelles fraudes par analyse de la consommation du circuit intégré exécutant un algorithme d'exponentiation modulaire prenant comme exposant la quantité confidentielle.

Pour atteindre tout ou partie de ces objets ainsi que d'autres, la présente invention prévoir un procédé de protection d'une quantité numérique contenue dans un circuit intégré sur un premier nombre de bits, dans un calcul d'exponentiation modulaire d'une donnée par ladite quantité numérique, consistant à :

sélectionner au moins un deuxième nombre compris entre l'unité et ledit premier nombre moins deux ;

diviser ladite quantité numérique en au moins deux parties, une première partie comprenant, depuis le bit de rang nul, un nombre de bits égal audit deuxième nombre, une deuxième partie comprenant les bits restants ;

pour chaque partie de la quantité, calculer une première exponentiation modulaire de ladite donnée par la partie concernée et une deuxième exponentiation modulaire du résultat de la première par le chiffre 2 élevé à la puissance du rang du premier bit de la partie concernée ; et

calculer le produit des résultats des deuxièmes exponentiations modulaires.

Selon un mode de mise en oeuvre de la présente invention, ledit deuxième nombre est sélectionné de façon aléatoire.

Selon un mode de mise en oeuvre de la présente invention, une nouvelle sélection aléatoire est effectuée à chaque nouvelle exécution de l'algorithme.

Selon un mode de mise en oeuvre de la présente invention, lesdites deux exponentiations modulaires sont inversées.

Selon un mode de mise en oeuvre de la présente invention, ladite deuxième partie est divisée en au moins deux parties sur la base d'au moins un troisième nombre, de préférence sélectionné aléatoirement, entre le deuxième nombre plus un et ledit premier nombre moins deux, les étapes de calcul des première et deuxième exponentiations modulaires et du produit des résultats des deuxièmes exponentiations modulaires étant appliquées à chacune des parties.

Selon un mode de mise en oeuvre de la présente invention, k nombres croissants $j_x$ sont sélectionnés entre l'unité et ledit premier nombre moins deux, le calcul d'exponentiation modulaire de ladite donnée notée M par ladite quantité notée d étant obtenu par l'application de la formule :

$$M^d = \prod_{x=1}^{k}\left(\left(M^{d_x}\right)^{2^{j_x}}\right) \bmod P \quad \text{ou} \quad M^d = \prod_{x=1}^{k}\left(\left(M^{2^{j_x}}\right)^{d_x}\right) \bmod P \, ,$$

avec

$$d_x = \sum_{i=j_x}^{j_{x+1}} d_i 2^i \, ,$$

où x désigne le rang du nombre $j_x$ dans lesdits k nombres croissants avec $j_o = 0$ et $j_k = n-1$ où n représente ledit premier nombre, $d_x$ désigne la partie de rang x de ladite quantité, P désigne le modulo et $d_i$ désigne le bit de rang i de ladite quantité.

Selon un mode de mise en oeuvre de la présente invention, le calcul est inclus dans un algorithme choisi parmi les algorithmes DSA, RSA et Diffie-Hellman.

La présente invention prévoit également un circuit intégré.

La présente invention prévoit également une carte à puce.

Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 qui a été décrite précédemment représente, de façon très schématique, partielle et sous forme de blocs, un exemple de circuit intégré du type auquel s'applique la présente invention ;
la figure 2 est un organigramme représentant les étapes classiques d'un calcul d'exponentiation modulaire ; et
la figure 3 représente, sous forme d'organigramme, un mode de mise en oeuvre du procédé de calcul d'exponentiation modulaire selon la présente invention.

Pour des raisons de clarté, seules les étapes de procédé et éléments de circuit qui sont utiles à la compréhension de l'invention ont été représentés aux figures et seront décrits par la suite. En particulier, les détails constitutifs de l'unité centrale et notamment les opérateurs utilisés pour calculer une exponentiation modulaire n'ont pas été exposés, l'invention étant compatible avec tout microprocesseur classique exploitant des données mémorisées. De plus, l'exploitation faite en amont ou en aval de l'algorithme d'exponentiation modulaire traité par l'invention, du message et/ou des quantités secrètes n'a pas été détaillée, l'invention étant là encore compatible avec tout algorithme classique d'exponentiation modulaire.

Description détaillée

Une caractéristique d'un mode de mise en oeuvre de la présente invention est de diviser le calcul de l'exponentiation modulaire en plusieurs calculs sur des parties de la quantité secrète (n'importe quelle quantité numérique). En d'autres termes, l'invention prévoit de diviser la quantité secrète en plusieurs parties et d'appliquer ces parties à des étapes d'exponentiation modulaire successives.

Une autre caractéristique d'un mode de mise en oeuvre de la présente invention est de sélectionner les plages de bits de la quantité secrète de façon aléatoire, de préférence, en changeant les parties de quantité secrètes à chaque nouvelle exécution de l'exponentiation modulaire.

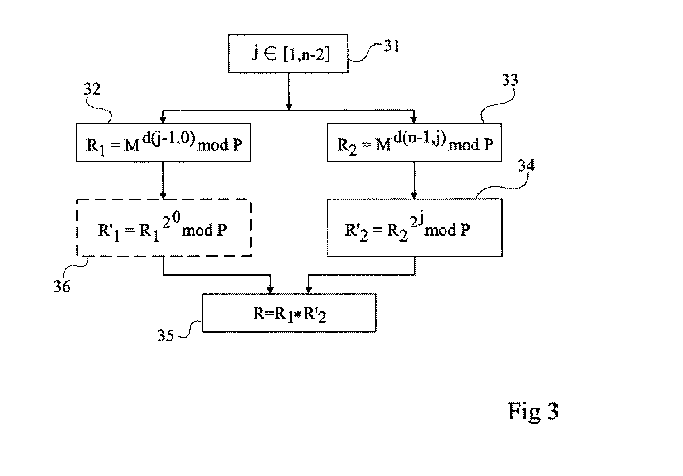

La figure 3 est un organigramme simplifié d'étapes d'un mode de mise en oeuvre d'un calcul d'exponentiation modulaire selon la présente invention.

En figure 3, on suppose que le calcul de l'exponentiation modulaire est divisé en deux parties d'une quantité numérique représentant, par exemple, une quantité secrète.

On commence (bloc 31) par sélectionner de façon aléatoire un nombre j compris entre 1 et n-2. Comme précédemment, n désigne le nombre de bits de la quantité secrète d qui peut s'écrire sous la forme :

$$d = \sum_{i=0}^{n-1} d_i 2^i .$$

Le nombre j sert à diviser la quantité secrète d en deux parties. Une première partie d(j-1, 0) contient les bits de rangs 0 à j-1 de la quantité d. Une deuxième partie d(j, n-1) contient les bits de rang j à n-1.

On calcule (bloc 32, R1 = Md$^{(j-1,0)}$ mod P) une première exponentiation modulaire du message M par la première partie d(j-1, 0) de la quantité secrète, modulo P. On utilise les mêmes notations que celles définies précédemment, à savoir que P représente un nombre sur p bits et M le message de données à soumettre à l'exponentiation modulaire par la quantité secrète d, M étant codé sur au plus p bits. Le calcul du premier résultat R1 s'effectue, par exemple, par la mise en oeuvre d'un procédé classique du type de celui illustré par la figure 2.

Le message M est, en parallèle ou successivement, soumis (bloc 33, R2 = M$^{d(n-1,j)}$ mod P) à un autre calcul d'exponentiation modulaire par la deuxième partie d(n-1, j) de la quantité secrète. On obtient un deuxième résultat intermédiaire R2 stocké, par exemple, dans un registre distinct du résultat R1. Cette deuxième exponentiation modulaire est, par exemple, également effectuée en mettant en oeuvre un algorithme classique du type de celui exposé en relation avec la figure 2.

Puis (bloc 34, R2' = **R2$^{2j}$** mod P), au moins le résultat R2 de la deuxième exponentiation modulaire est élevé à la puissance $2^j$, modulo P et le résultat R2' est stocké, par exemple, dans un troisième registre. Cette étape correspond à une troisième exponentiation modulaire de la valeur R2 par $2^j$, effectuée là encore de façon classique.

Enfin, le résultat final de l'exponentiation modulaire est obtenu en multipliant les premier et troisième résultats intermédiaires (bloc 35, R = R1*R2' = $M^d$ mod P).

En figure 3, une étape supplémentaire 36 (R1' = $R1^{2^0}$ mod P) a été représentée en pointillées. Cette étape maintient le résultat R1 mais peut permettre d'améliorer le masquage de l'exécution.

En prenant pour exemple l'exponentiation modulaire du nombre 3 (M = 3) par l'exposant 10 (d = 10) sur 4 bits avec un modulo 11, les résultats intermédiaires obtenus pour j = 2 sont les suivantes :

d(1,0) = 10 = 2 et d (3, 2) - 10 = 2 (sur 4 bits, 10 s'écrit 1010) ;
R1 = $3^2$ mod 11 ;
R2 = $3^2$ mod 11 ;
R2' = $(3^2)^4$ mod 11, soit R2' = $3^8$ mod 11 = 5.

Le résultat final R s'écrit :

R = $3^2$ * $3^8$ mod 11 = 9*5 mod 11 = 1, ou :
R = $3^{2+8}$ mod 11 = $3^{10}$ mod 11 = 1.

En variante, les étapes 33 et 34 sont inversées, c'est-à-dire que le deuxième résultat intermédiaire est une exponentiation modulaire du message M par $2^j$, le troisième résultat intermédiaire étant une exponentiation modulaire du deuxième résultat par la deuxième partie d(n-1, j) de la clé.

De préférence, le nombre j est changé à chaque calcul d'exponentiation modulaire. Cela empêche à un fraudeur éventuel de pouvoir découvrir la quantité secrète d par une méthode itérative d'analyse statistique de la consommation du circuit intégré dans la mesure où les parties de quantité secrète traitées changent à chaque fois.

Par rapport à une exécution classique d'exponentiation modulaire, l'invention requiert d'utiliser des registres supplémentaires pour stocker les résultats intermédiaires. Le nombre de registres supplémentaires est au minimum d'un pour stocker le premier résultat d'exponentiation modulaire R1 en attendant que les deuxième et troisième résultats intermédiaires soient calculés. Le troisième résultat R2' peut réutiliser le registre ayant stocké le deuxième résultat R2.

Selon un autre mode de mise en oeuvre, la quantité d est divisée en plus de deux parties. Cela revient à considérer k nombres croissants $j_x$ (x compris entre 1 et k) avec k supérieur ou égal à 3, $j_1 = 0$ et $j_k = n-1$, de sorte que la quantité d peut s'exprimer de la façon suivante :

$$d = \sum_{x=1}^{k} d_x \quad \text{avec} \quad d_x = \sum_{i=j_x}^{j_{x+1}} d_i 2^i \,,$$

ou

$$d = \sum_{x=1}^{k} \left( \sum_{i=j_x}^{j_{x+1}} d_i 2^i \right).$$

La mise en oeuvre du procédé de l'invention peut alors s'exprimer :

$$M^d = \prod_{x=1}^{k} \left( \left( M^{d_x} \right)^{2^{j_x}} \right) \mod P \,,$$

ou

$$M^d = \prod_{x=1}^{k} \left( \left( M^{2^{j_x}} \right)^{d_x} \right) \bmod P \; .$$

Bien entendu, la présente invention est susceptible de diverses variantes et modifications qui apparaîtront à l'homme de l'art. En particulier, la mise en oeuvre pratique de l'invention est à la portée de l'homme du métier à partir de la description fonctionnelle donnée ci-dessus en utilisant des outils en eux-mêmes classiques.

## Revendications

1. Procédé de protection d'une quantité numérique (d) contenue dans un circuit intégré (1) sur un premier nombre de bits (n), dans un calcul d'exponentiation modulaire d'une donnée (M) par ladite quantité numérique, procédé consistant à :

   sélectionner au moins un deuxième nombre (j) compris entre l'unité et ledit premier nombre moins deux ;
   diviser ladite quantité numérique en au moins deux parties, une première partie (d(j-1, 0)) comprenant, depuis le bit de rang nul, un nombre de bits égal audit deuxième nombre, une deuxième partie (d(n-1, j)) comprenant les bits restants ;
   le procédé étant **caractérisé en ce qu'**il comprend en outre les étapes suivantes:

   pour chaque partie de la quantité, calculer une première exponentiation modulaire (32, 33) de ladite donnée par la partie concernée et une deuxième exponentiation modulaire (36, 34) du résultat de la première par le chiffre 2 élevé à la puissance du rang du premier bit de la partie concernée ; et
   calculer (35) le produit des résultats des deuxièmes exponentiations modulaires.

2. Procédé selon la revendication 1, dans lequel ledit deuxième nombre (j) est sélectionné de façon aléatoire.

3. Procédé selon la revendication 2, dans lequel une nouvelle sélection aléatoire est effectuée à chaque nouvelle exécution de l'algorithme.

4. Procédé selon l'une quelconque des revendications 1 à 3, dans lequel l'odre desdites deux exponentiations modulaires est inversé.

5. Procédé selon l'une quelconque des revendications 1 à 4, dans lequel ladite deuxième partie est divisée en au moins deux parties sur la base d'au moins un troisième nombre, entre le deuxième nombre plus un et ledit premier nombre moins deux, les étapes de calcul des première et deuxième exponentiations modulaires et du produit des résultats des deuxièmes exponentiations modulaires étant appliquées à chacune des parties.

6. Procédé selon l'une quelconque des revendications 1 à 5, dans lequel k nombres croissants $j_x$ sont sélectionnés entre l'unité et ledit premier nombre moins deux, le calcul d'exponentiation modulaire de ladite donnée notée M par ladite quantité notée d étant obtenu par l'application de la formule :

$$M^d = \prod_{x=1}^{k} \left( \left( M^{d_x} \right)^{2^{j_x}} \right) \bmod P \quad \text{ou} \quad M^d = \prod_{x=1}^{k} \left( \left( M^{2^{j_x}} \right)^{d_x} \right) \bmod P \; ,$$

avec

$$d_x = \sum_{i=j_x}^{j_{x+1}} d_i 2^i \; ,$$

où x désigne le rang du nombre $j_x$ dans lesdits k nombres croissants avec $j_o = 0$ et $j_k = n-1$ où n représente ledit premier nombre, $d_x$ désigne la partie de rang x de ladite quantité, P désigne le modulo et $d_i$ désigne le bit de rang i de ladite quantité.

7. Procédé selon l'une quelconque des revendications 1 à 6, mis en oeuvre dans un algorithme choisi parmi les algorithmes DSA, RSA et Diffie-Hellman.

8. Circuit intégré comprenant au moins une unité centrale de traitement (11), une mémoire (12) et un circuit d'entrée-sortie (13), **caractérisé en ce qu'**il comporte des moyens pour la mise en oeuvre des étapes du procédé selon l'une quelconque des revendications 1 à 7.

9. Carte à puce, **caractérisée en ce qu'**elle comprend un circuit intégré (1) selon la revendication 8.

**Claims**

1. A method for protecting a digital quantity (d) contained in an integrated circuit (1) over a first number of bits (n), in a calculation of modular exponentiation of data (M) by said digital quantity, comprising the steps of:

   selecting at least a second number (j) ranging between unity and said first number minus two;
   dividing said digital quantity into at least two portions, a first portion (d(j-1,0)) comprising, from the bit of rank zero, a number of bits equal to said second number, a second portion (d(n-1,j)) comprising the remaining bits; this method being **characterized in that** it further comprises the steps of:

      for each portion of the quantity, calculating a first modular exponentiation (32, 33) of said data by the concerned portion and a second modular exponentiation (36, 34) of the result of the first one by number 2 raised to the power of the rank of the first bit of the concerned portion; and
      calculating (35) the product of the results of the second modular exponentiations.

2. The method of claim 1, wherein said second number (j) is selected randomly.

3. The method of claim 2, wherein a new random selection is performed on each new execution of the algorithm.

4. The method of any of claims 1 to 3, wherein the order of said two modular exponentiations is inverted.

5. The method of any of claims 1 to 4, wherein said second portion is divided into at least two portions based on at least a third number, between the second number plus one and said first number minus two, the steps of calculation of the first and second modular exponentiations and of the product of the results of the second modular exponentiations being applied to each of the portions.

6. The method of any of claims 1 to 5, wherein k increasing numbers $j_x$ are selected between unity and said first number minus two, the modular exponentiation calculation of said data noted M by said quantity noted d being obtained by the application of the following formula:

$$M^d = \prod_{x=1}^{k}\left(\left(M^{d_x}\right)^{2^{j_x}}\right) \mod P \quad \text{or} \quad M^d = \prod_{x=1}^{k}\left(\left(M^{2^{j_x}}\right)^{d_x}\right) \mod P \;,$$

with

$$d_x = \sum_{i=j_x}^{j_x+1} d_i\, 2^i \;,$$

where x designates the rank of number $j_x$ in said k increasing numbers, with $j_0 = 0$ and $j_k = n-1$ where n represents said first number, $d_x$ designates the portion of rank x of said quantity, P designates the modulo, and $d_i$ designates

the bit of rank i of said quantity.

7. The method of any of claims 1 to 6, implemented in an algorithm selected from among the DSA, RSA, and Diffie-Hellman algorithms.

8. An integrated circuit comprising at least a central processing unit (11), a memory (12), and an input/output circuit (13), comprising means for implementing the steps of the method of any of claims 1 to 7.

9. A smart card, **characterized in that** it comprises the integrated circuit (1) of claim 8.


**Patentansprüche**

1. Verfahren zum Schützen einer digitalen Größe(d), die in einem integrierten Schaltkreis (1) über einer ersten Anzahl von Bits (n) enthalten ist, bei der Berechnung einer modularen Potenzierung von Daten (M) mit der digitalen Größe, mit folgenden Verfahrensschritten:

   Auswählen wenigstens einer zweiten Zahl (j) im Bereich zwischen eins und der ersten Zahl minus zwei;
   Aufteilen der digitalen Größe in wenigstens zwei Teile, wobei ein erster Teil (d(j-1, 0)), ausgehend von dem Bit der Ordnung Null, einer Anzahl von Bits umfasst, die gleich der zweiten Zahl ist, und wobei der zweite Teil (d (n-1, j)) die übrigen Bits umfasst;
   wobei das Verfahren **gekennzeichnet ist durch** die weiteren Schritte:

   für jeden Teil der Größe, Berechnen einer ersten modularen Potenzierung (32, 33) der Daten mit dem betroffenen Teil und einer zweiten modularen Potenzierung (36, 34) des Ergebnisses der ersten mit der Zahl zwei, die erhoben ist zu der Potenz der Ordnung des ersten Bits des betroffenen Teils; und Berechnen (35) des Produktes der Ergebnisse der zweiten modularen Potenzierungen.

2. Verfahren nach Anspruch 1, wobei die zweite Zahl (j) zufällig ausgewählt wird.

3. Verfahren nach Anspruch 2, wobei eine neue Zufallsauswahl bei jeder neuen Ausführung des Algorithmus durchgeführt wird.

4. Verfahren nach einem der Ansprüche 1 bis 3, wobei die Ordnung der zwei modularen Potenzierungen invertiert wird.

5. Verfahren nach einem der Ansprüche 1 bis 4, wobei der zweite Teil aufgeteilt wird in wenigstens zwei Teile auf der Grundlage wenigstens einer dritten Zahl, die zwischen der zweiten Zahl plus eins und der ersten Zahl minus zwei liegt, wobei die Schritte des Berechnens der ersten und der zweiten modularen Potenzierung und des Produkts des Ergebnisses der zweiten modularen Potenzierungen auf jeden der Teile angewandt wird.

6. Verfahren nach einem der Ansprüche 1 bis 5, wobei k zunehmende Zahlen $j_x$ zwischen eins und der ersten Zahl minus zwei ausgewählt werden und die Berechnung der modularen Potenzierung der mit M bezeichneten Daten mit der mit d bezeichneten Größe erhalten wird durch die Anwendung der folgenden Formeln:

$$M^d = \prod_{x=1}^{k}\left(\left(M^{d_x}\right)^{2^{j_x}}\right)\mod P \ \text{ oder } \ M^d = \prod_{x=1}^{k}\left(\left(M^{2^{j_x}}\right)^{d_x}\right)\mod P,$$

mit

$$d_x = \sum_{i=j_x}^{j_x+1} d_i 2^i,$$

wobei x die Ordnung der Zahl $j_x$ in den k zunehmenden Zahlen bezeichnet, wobei $j_0 = 0$ und $j_k = n-1$, wobei n die erste Zahl bezeichnet, $d_x$ den Teil der Ordnung x der Größe bezeichnet, P den Modulo bezeichnet, und $d_i$ das Bit der Ordnung i in der Größe bezeichnet.

7. Verfahren nach einem der Ansprüche 1 bis 6, das realisiert ist in einem Algorithmus, der ausgewählt ist unter den Algorithmen DSA, RSA und Diffie-Hellman.

8. Integrierter Schaltkreis mit wenigstens einer zentralen Verarbeitungseinheit (11), einem Speicher (12) und einem Eingangs-Ausgangs-Schaltkreis (13), **gekennzeichnet durch** Mittel zum Realisieren der Schritte des Verfahrens nach einem der Ansprüche 1 bis 7.

9. Smart-Card, **dadurch gekennzeichnet, dass** sie den integrierten Schaltkreis (1) von Anspruch 8 umfasst.

Fig 1

Fig 2

Fig 3

**EP 1 891 769 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6298135 B